# EUROPÄISCHE PATENTANMELDUNG

(11) **EP 1 930 195 A2**
(43) Veröffentlichungstag der Anmeldung: **11.06.2008**
(21) Anmeldenummer: 07021870.6
(22) Anmeldetag: 12.11.2007
(51) Int. Cl.: B60J 5/10

(54) **Klappe für ein Fahrzeug**

(30) Priorität: 08.12.2006 DE 102006057859
(71) Anmelder: REHAU AG + Co, 95111 Rehau (DE)
(72) Erfinder: Lux, Stephan, 95182 Döhlau (DE); Mett, Thomas, 95182 Döhlau (DE)

(57) **Zusammenfassung**

Die Erfindung betrifft eine Klappe, vorzugsweise eine Heckklappe für ein Fahrzeug, die über eine Schwenkachse schwenkbar an der Karosserie des Fahrzeugs festlegbar ist, umfassend einen Strukturkörper aus Kunststoff und eine Verstärkung aus Metall.

## Beschreibung

Die Erfindung betrifft eine Klappe, vorzugsweise eine Heckklappe für ein Fahrzeug, die über eine Schwenkachse schwenkbar an der Karosserie des Fahrzeugs festlegbar ist, umfassend einen Strukturkörper aus Kunststoff und eine Verstärkung aus Metall.

Eine gattungsgemäße Heckklappe ist aus der EP 1028 016 B1 bekannt. Die herkömmliche Heckklappe umfasst eine das Erscheinungsbild bestimmende äußere Abdeckung und ein inneres Strukturteil aus Kunststoff. Zwischen äußerer Abdeckung und innerem Strukturteil ist eine rahmenartige Metallverstärkung vorgesehen, welche die auf die Heckklappe einwirkenden Kräfte zum Großteil aufnehmen soll.

Die herkömmliche Heckklappe umfasst eine Vielzahl von Einzelelementen und insbesondere eine komplexe Struktur. So ist der Rahmen der herkömmlichen Heckklappe eine Spezialanfertigung, welche in einem zwischen der äußeren Abdeckung und dem inneren Strukturteil definierten Hohlraum aufgenommen wird und sowohl gegenüber der äußeren Abdeckung als auch gegenüber dem inneren Strukturteil festgelegt wird (siehe Figur 3 der EP 1 028 016 B1). Die herkömmliche Heckklappe erfordert daher einen hohen Kosten- und Materialaufwand bei der Herstellung und Montage.

Der Erfindung liegt die Aufgabe zugrunde, die herkömmliche Heckklappe dahingehend zu verbessern, dass der erforderliche Kosten- und Materialaufwand bei der Herstellung und Montage unter Beibehaltung der bestimmungsgemäßen Funktion der Heckklappe erheblich verringert wird.

Zur Lösung dieser Aufgabe stellt die Erfindung die Klappe gemäß Anspruch 1 bereit. Anspruch 1 offenbart eine Klappe, vorzugsweise eine Heckklappe für ein Fahrzeug, die über eine Schwenkachse verschwenkbar an der Karosserie des Fahrzeugs festlegbar ist, umfassend einen Strukturkörper aus Kunststoff und eine Verstärkung aus Metall, wobei die Verstärkung aus Metall als eine sich durch den Strukturkörper erstreckende Metallstange ausgebildet ist.

Die Metallstange ist ein gegenüber der Rahmenspezialanfertigung aus dem Stand der Technik kostengünstiges Verstärkungselement und kann von einem Stranggut gerade in erforderlicher Länge zurechtgeschnitten werden. In dem sich die Metallstange durch den Strukturkörper erstreckt, ist die Metallstange fest mit dem Strukturkörper verbunden und gleichzeitig weitgehend unsichtbar bzw. abgedeckt. Die Metallstange bietet einen Ansatz für ein Haltemittel wie eine Gasdruckfeder oder ein Fangband, um die Heckklappe in einer geöffneten Stellung vorzugsweise in waagrechter Position zu halten und nimmt bspw. beim Beladen des Fahrzeugs, wenn eine Last auf die Heckklappe aufgebracht wird, die eingeleiteten Kräfte auf, um sie über das Haltemittel bzw. die Gasdruckfeder oder das Fangband unmittelbar auf die Fahrzeugkarosserie zu übertragen. Somit bleibt die bestimmungsgemäße Funktion der Heckklappe erhalten, während der erforderliche Kosten- und Materialaufwand bei der Herstellung und Montage gegenüber dem Stand der Technik in erheblicher Weise verringert werden kann.

In einer bevorzugten Ausführungsform der Erfindung weist die Metallstange ein Normprofil, vorzugsweise ein T-Profil, Doppel-T-Profil, Rechteckprofil oder Kreisprofil auf. Normprofile sind mit hoher Fertigungsgenauigkeit in der Regel kostengünstig verfügbar. Die genannten Profile zeichnen sich durch besonders hohe Stabilität bei geringem Gewicht und geringem Materialeinsatz aus. Derartige Profile sind demnach für die in Rede stehende Anwendung besonders gut geeignet.

In einer weiteren bevorzugten Ausführungsform der Erfindung ist die Metallstange als Hohlkörper, vorzugsweise als Rohr ausgebildet. Gegenüber einem massiven Körper weist ein Hohlkörper ein erheblich verringertes Gewicht auf. Die Gewichtsverlagerung bei der Metallstange ist der Gesamtgewichtsverringerung der erfindungsgemäßen Klappe zuträglich.

In einer weiteren bevorzugten Ausführungsform der Erfindung ist die Metallstange als Hohlkörper, vorzugsweise als Rohr ausgebildet. Gegenüber einem massiven Körper weist ein Hohlkörper ein erheblich verringertes Gewicht auf. Die Gewichtsverringerung bei der Metallstange ist der Gesamtgewichtsverringerung der erfindungsgemäßen Klappe zuträglich.

In einer weiteren bevorzugten Ausführungsform der Erfindung erstreckt sich die Metallstange im Wesentlichen parallel zur Schwenkachse.

So bietet die Metallstange über die Breite der Klappe mehrere Ansatzpunkte für mehrere gleichartige Haltemittel, wie eine Gasdruckfeder oder ein Fangband, um die Heckklappe in geöffneter Stellung in etwa in waagerechter Position zu halten, um das Fahrzeug durch die Hecköffnung beladen zu können.

In einer weiteren bevorzugten Ausführungsform der Erfindung ist zumindest eine weitere sich im Wesentlichen parallel zur ersten Metallstange erstreckende Metallstange vorgesehen. Dadurch wird die Klappe weiter verstärkt.

In einer besonders bevorzugten Ausführungsform der Erfindung ist der Strukturkörper als Blasformteil, vorzugsweise als Extrusionsblasformteil ausgebildet. Dieses Herstellungsverfahren eignet sich aufgrund des geringen Materialeinsatzes und der geringen Herstellungskosten insbesondere für die Herstellung von Massenware.

In einer weiteren bevorzugten Ausführungsform der Erfindung weist der Strukturkörper im Querschnitt eine im Wesentlichen geschlossene Kontur auf. Dadurch wird das Eindringen von Feuchtigkeit in ein von dem Strukturkörper begrenztes Volumen verhindert und die Stabilität und Steifigkeit des Strukturkörpers gegenüber einer geöffneten Kontur erhöht.

In einer weiteren bevorzugten Ausführungsform der Erfindung weist der Strukturkörper zumindest ein rippenförmiges Versteifungselement auf. Das Versteifungselement erhöht die Steifigkeit des Strukturkörpers und verringert die Gefahr der Verformung des Strukturkörpers, beispielsweise wenn eine Belastung auf die Heckklappe aufgebracht wird, z.B. bei der Beladung des Fahrzeugs durch die Hecköffnung.

In einer weiteren bevorzugten Ausführungsform der Erfindung sind die Versteifungselemente als Seitenwände von rinnenförmigen Vertiefungen ausgebildet. Die rinnenförmigen Vertiefungen erhöhen die Steifigkeit des Strukturkörpers in erheblicher Weise.

In einer weiteren bevorzugten Ausführungsform der Erfindung ist der Strukturkörper als ein Spritzgussteil ausgebildet. Dieses Herstellungsverfahren eignet sich aufgrund des geringen Materialeinsatzes und des geringen Kostenaufwands bei der Serienfertigung in besonderer Weise für die in Rede stehende Anwendung.

In einer weiteren bevorzugten Ausführungsform der Erfindung erstreckt sich das Versteifungselement im Querschnitt im Wesentlichen senkrecht zu einer Erstreckungsrichtung der Heckklappe. In dieser Ausführung lassen sich die quer zur Erstreckungsrichtung der Heckklappe bzw. drehmomentartig um die Schwenkachse wirkenden Belastungen auf die Heckklappe in besonders vorteilhafter Weise aufnehmen und absorbieren.

In einer weiteren bevorzugten Ausführungsform der Erfindung weist der Strukturkörper eine Aufnahme für die Metallstange auf. Dadurch lässt sich die Metallstange besonders einfach, d.h. ohne gesondertes Werkzeug und ohne gesonderte Befestigungsmittel in dem Strukturkörper festlegen.

In einer weiteren bevorzugten Ausführungsform der Erfindung weist die Klappe eine Au-βenblende auf. Die Außenblende kann als Dekorelement ausgebildet sein, so dass an das Erscheinungsbild des Strukturkörpers oder Metallstange keine besonderen ästhetischen und optischen Anforderungen zu stellen sind und der Strukturkörper sowie die Metallstange besonders kostengünstig herstellbar sind.

In einer weiteren bevorzugten Ausführungsform der Erfindung ist die Außenblende als ein Spritzgussteil ausgebildet. Das Spritzgussherstellungsverfahren eignet sich insbesondere für die Serienfertigung von Massenware aufgrund des besonders geringen Kosten- und Materialaufwands bei der Herstellung.

In einer weiteren bevorzugten Ausführungsform der Erfindung ist die Aufnahme für die Metallstange und/oder sind die rinnenförmigen Vertiefungen von der Außenblende abgedeckt. Dabei eignet sich eine zum Fahrzeuginnenraum weisende Innenwand des Strukturkörpers als Dekorfläche zur Anbringung einer Innenraumverkleidung oder dergleichen, wobei die funktionalen Elemente des Strukturkörpers, d.h. die Aufnahmen für die Metallstangen und/oder die rinnenförmigen Vertiefungen weder von der Fahrzeugaußenseite noch Fahrzeuginnenseite sichtbar sind.

Die bevorzugten Ausführungsbeispiele der vorliegenden Erfindung werden nachstehend mit Bezug auf die beiliegenden Zeichnungen beschrieben.

### Beschreibung der Zeichnungen:

- Figur 1: zeigt eine Heckansicht eines Fahrzeugs mit der erfindungsgemäßen Heckklappe in geöffneter Stellung.
- Figur 2a: zeigt einen Schnitt A-A der erfindungsgemäßen Heckklappe aus Figur 1 in einer ersten Ausführungsform, wobei der Strukturkörper als Blasformteil ausgebildet ist.
- Figur 2b: zeigt eine Seitenansicht der erfindungsgemäßen Heckklappe der ersten Ausführungsform aus Figur 2a.
- Figur 3a: zeigt einen Schnitt A-A der erfindungsgemäßen Heckklappe aus Figur 1 in einer zweiten Ausführungsform, wobei der Strukturkörper als Blasformteil ausgebildet ist und die Heckklappe eine Blende als Außenverkleidung aufweist.
- Figur 3b: zeigt eine Seitenansicht der erfindungsgemäßen Heckklappe der zweiten Ausführungsform aus Figur 3a.
- Figur 4a: zeigt einen Schnitt A-A der erfindungsgemäßen Heckklappe aus Figur 1 in einer dritten Ausführungsform, wobei der Strukturkörper als Spritzgussteil ausgebildet ist und wobei die Heckklappe eine Blende als Außenverkleidung aufweist.
- Figur 4b: zeigt eine Seitenansicht der erfindungsgemäßen Heckklappe der dritten Ausführungsform aus Figur 4a.

### Beschreibung der bevorzugten Ausführungsbeispiele:

Die bevorzugten Ausführungsbeispiele der Erfindung werden nachstehend mit Bezug auf die beiliegenden Zeichnungen beschrieben.

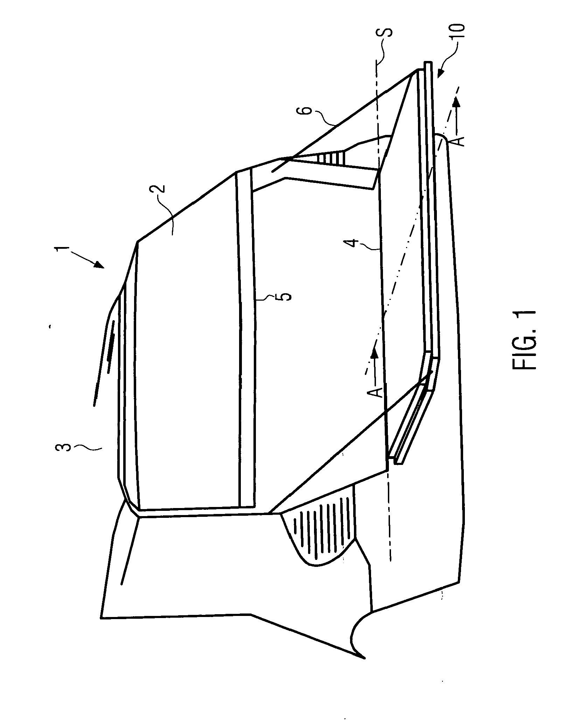

Figur 1 zeigt eine Heckansicht eines Fahrzeugs 1. Das Fahrzeug 1 umfasst eine zweiteilige Heckklappe, bestehend aus dem Heckklappenoberteil 2 und dem Heckklappenunterteil 10, welches die Heckklappe 10 im Sinne dieser Erfindung bildet. Das Heckklappenoberteil 2 ist gelenkig an einer Kante am Dach 3 des Fahrzeugs 1 befestigt und das Heckklappenunterteil 10 ist gelenkig an einer Ladekante 4 am Boden des Fahrzeugs 1 bzw. der Fahrzeugkarosserie befestigt. Wenn sich das Heckklappenoberteil 2 und das Heckklappenunterteil 10 in geschlossener Stellung befinden, berühren sich das Heckklappenoberteil 2 und das Heckklappenunterteil 10 an der Kontaktlinie 5. Um das Heckklappenunterteil 10 in der in Figur 1 gezeigten geöffneten Stellung zu halten, so dass das Fahrzeug 1 durch die Hecköffnung beladbar ist, sind Haltemittel 6 in der Gestalt von Fangbändern oder Gasdruckdämpfern vorgesehen, die jeweils einerseits mit der Fahrzeugkarosserie und andererseits mit einem von der Schwenkachse S beabstandeten Ende der Heckklappe 10 verbunden sind. Die Länge eines Haltemittels 6 ist jeweils so bemessen, dass das Haltemittel 6 die Heckklappe 10 in der in Figur 1 gezeigten geöffneten Stellung der Heckklappe 10 im Wesentlichen in waagerechter Stellung hält.

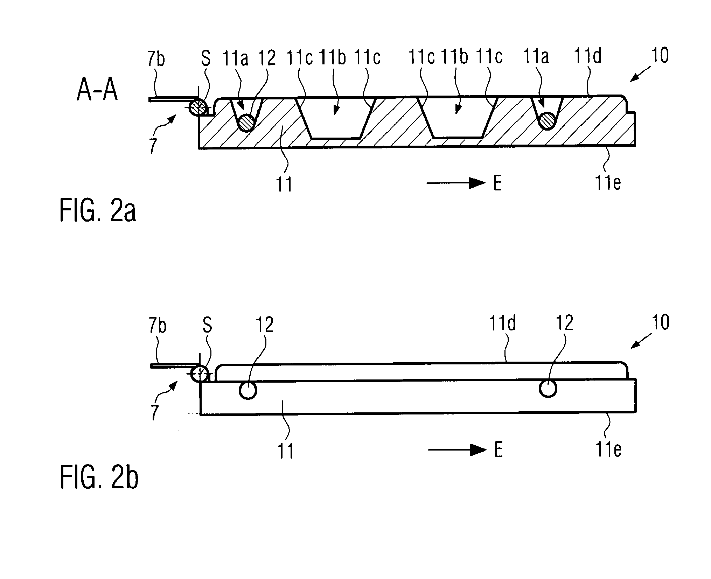

Ein erstes Ausführungsbeispiel der erfindungsgemäßen Klappe 10 wird nachfolgend mit Bezug auf die Figuren 2a und 2b erläutert.

Figur 2a zeigt die erfindungsgemäße Heckklappe 10 des ersten Ausführungsbeispiels der vorliegenden Erfindung im Schnitt A-A aus Figur 1. Die Heckklappe 10 des ersten Ausführungsbeispiels ist über die Schwenkachse S schwenkbar an der Karosserie des Fahrzeugs 1 festlegbar und umfasst einen Strukturkörper 11 aus Kunststoff sowie eine Verstärkung 12 aus Metall, wobei die Verstärkung 12 aus Metall als eine sich durch den Strukturkörper 11 erstreckende Metallstange 12 ausgebildet ist. Der Strukturkörper 11 der Heckklappe 10 des ersten Ausführungsbeispiels ist als einteiliges Blasformteil, vorzugsweise als ein Extrusionsblasformteil ausgebildet und weist im Querschnitt der Figur 2a eine geschlossene Kontur auf. Der Strukturkörper 11 umfasst im Wesentlichen rinnenförmige Aufnahmen 11a zur Aufnahme der Metallstange 12, weiterhin im Wesentlichen rinnen- bzw. wellenförmige Vertiefungen 11 b, sowie rippenförmige Versteifungselemente 11 c, die im vorliegenden Ausführungsbeispiel die Seitenwände der rinnen- bzw. wellenförmigen Vertiefungen 11 b bilden.

Die rinnenförmigen Aufnahmen 11a, die rinnen- bzw. wellenförmigen Vertiefungen 11 b und die rippenförmigen Versteifungselemente 11c erstrecken sich von einer Innenwand 11d des Strukturkörpers 11 im Wesentlichen senkrecht zur Innenwand 11d bzw. senkrecht zu einer Erstreckungsrichtung E der Heckklappe 10 bzw. des Strukturkörpers 11 und verlaufen im Wesentlichen parallel zur Schwenkachse S über die gesamte Breite des Strukturkörpers S. Die Seitenwände 11c, welche die Vertiefungen 11b seitlich begrenzen, bilden im vorliegenden Ausführungsbeispiel die rippenförmigen Versteifungselemente 11 c im Sinne der Erfindung. Im vorliegenden Ausführungsbeispiel sind insgesamt zwei rinnenförmige Aufnahmen vorgesehen. Die Aufnahmen 11a ragen von der Innenwand 11 d des Strukturkörpers 11 im Wesentlichen bis zur Mitte der Tiefe des Strukturkörpers 11 (die Tiefe entspricht dem Abstand zwischen der Innenwand 11 d und der Außenwand 11e des Strukturkörpers 11) in den Strukturkörper 11 hinein. Die Vertiefungen 11b erstrecken sich von der Innenwand 11d bis in etwa 80 bis 90% der Tiefe des Strukturkörpers 11 (die Tiefe entspricht dem Abstand zwischen der Innenwand 11 d und der Außenwand 11 e des Strukturkörpers 11) in den Strukturkörper 11 hinein. Sowohl die Aufnahmen 11 a als auch die Vertiefungen 11 b weisen im Mündungsbereich an der Innenwand 11d des Strukturkörpers 11 die größte Breite auf und verjüngen sich zum jeweiligen Boden.

Die Metallverstärkungen 12 sind erfindungsgemäß als Metallstangen ausgebildet. Die Metallstangen weisen im Querschnitt ein Normprofil, vorzugsweise ein T-Profil, Doppel-T-Profil, Rechteckprofil oder - wie im vorliegenden Ausführungsbeispiel - ein rundes Profil bzw. ein Kreisprofil auf. Zur Gewichtsreduktion kann die Metallstange als Hohlkörper, vorzugsweise als Rohr ausgebildet sein. Im vorliegenden Ausführungsbeispiel sind zwei Metallstangen 12 vorgesehen. Es versteht sich von selbst, dass zur Verstärkung der erfindungsgemäßen Heckklappe 10 weitere Metallstangen 12 vorgesehen sein können. Die Metallstangen 12 erstrecken sich im Wesentlichen parallel zur Schwenkachse S, wobei eine Metallstange 12 einen kleinen Abstand zur Schwenkachse S aufweist und die andere Metallstange einen großen Abstand zur Schwenkachse S aufweist.

Figur 2b zeigt eine Seitenansicht der erfindungsgemäßen Klappe des ersten Ausführungsbeispiels.

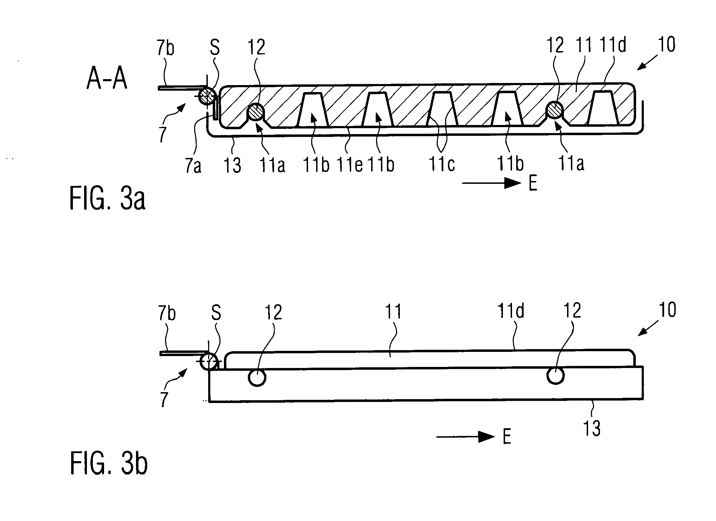

Die Enden der weiter von der Schwenkachse S entfernt liegenden Metallstange 12 sind verstärkt und dienen als Ansatzpunkt für das Haltemittel 6 (siehe Figur 1) bzw. für die Gasdruckfeder oder für das Fangband, so dass eine drehmomentartig um die Schwenkachse S wirkende Belastung der Heckklappe 10, z.B. beim Beladen des Fahrzeugs durch eine Hecköffnung, von dem Haltemittel 6 aufgenommen wird, so dass die Heckklappe 10 trotz Belastung in der in Figur 1 gezeigten waagerechten Stellung gehalten wird. Dadurch besteht eine geringere Gefahr der Verformung des Strukturkörpers 11 aus Kunststoff. Ein zweites Ausführungsbeispiel der Erfindung wird nachstehend mit Bezug auf die Figuren 3a und 3b beschrieben.

Im zweiten Ausführungsbeispiel umfasst die Klappe 10 des Fahrzeugs 1, die über die Schwenkachse S schwenkbar an der Karosserie des Fahrzeugs 1 festlegbar ist, einen Strukturkörper 11 aus Kunststoff, der als Blasformteil, vorzugsweise als Extrusionsblasformteil ausgebildet ist, eine Verstärkung aus Metall 12 in der Gestalt einer Metallstange 12, die sich durch den Strukturkörper 11 hindurch erstreckt, sowie eine Blende 13 als Außenverkleidung. Der als Blasformteil bzw. Extrusionsblasformteil ausgebildete Strukturkörper 11 weist im Querschnitt der Figur 3a eine geschlossene Kontur auf. An der Außenwand 11 e des Strukturkörpers 11, die durch die Blende 13 abgedeckt wird, sind zwei Aufnahmen 11 a für die Metallstangen 12 und insgesamt vier rinnenförmige Vertiefungen 11 b ausgebildet und zugänglich, wobei die Seitenwände 11c der rinnenförmigen Vertiefungen 11b die rippenförmigen Versteifungselemente 11 c im Sinne der Erfindung bilden. Die Innenwand 11d des Strukturkörpers weist in einem geschlossenen Zustand der Heckklappe 10 zum Fahrzeuginnenraum und ist mit einem beliebigen Dekor, z.B. Stoffbezug, Leder oder dergleichen versehen. Die Aufnahmen 11a erstrecken sich ausgehend von der Au-ßenwand 11 e des Strukturkörpers mit einem sich vom Mündungsbereich zum Boden hin verjüngenden Querschnitt bis auf etwa 50% der Tiefe des Strukturkörpers 11 (die Tiefe entspricht dem Abstand zwischen der Außenwand 11e und der Innenwand 11d des Strukturkörpers 11) in den Strukturkörper 11 hinein. Sowohl die Aufnahme 11a als auch die insgesamt vier Vertiefungen 11 b erstrecken sich vorzugsweise über die gesamte Breite des Strukturkörpers 11 im Wesentlichen senkrecht zur Außenwand 11e bzw. senkrecht zur Erstreckungsrichtung E und verlaufen im Wesentlichen parallel zur Schwenkachse S. Die Blende 13 bedeckt die gesamte Außenwand 11 e des Strukturkörpers 11, ausgehend von einem Scharnier 7 bis zu einem von dem Scharnier 7 beabstandeten Ende des Strukturkörpers 11, so dass die Aufnahmen 11a und die Vertiefungen 11 b abgedeckt und nicht sichtbar sind.

Figur 3b zeigt die Seitenansicht der erfindungsgemäßen Heckklappe 10 des zweiten Ausführungsbeispiels der Erfindung. Die Metallstangen 12 erstrecken sich im Wesentlichen parallel zur Schwenkachse S im Wesentlichen über die gesamte Breite der Heckklappe 10, wobei die Enden der Metallstangen 12 verstärkt sind und als Aufnahme bzw. Ansatzpunkt für das Haltemittel 6 bzw. die Gasdruckfeder oder das Fangband (siehe Figur 1) dienen.

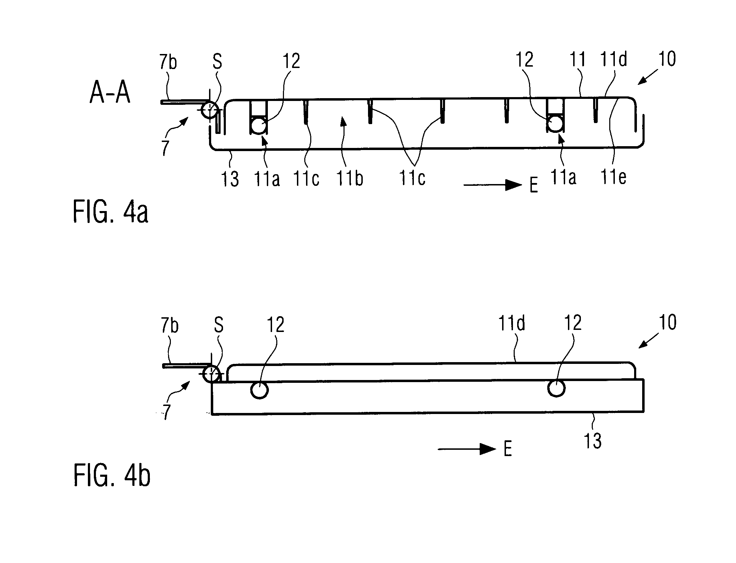

Ein drittes Ausführungsbeispiel der vorliegenden Erfindung wird nachstehend mit Bezug auf die Figuren 4a und 4b beschrieben.

Figur 4a zeigt einen Schnitt A-A der erfindungsgemäßen Heckklappe 10 aus Figur 1 gemäß dem dritten Ausführungsbeispiel der Erfindung. Die Klappe 10 gemäß diesem Ausführungsbeispiel der Erfindung ist über eine Schwenkachse S schwenkbar an der Karosserie des Fahrzeugs 1 festlegbar und umfasst den Strukturkörper 11 aus Kunststoff, der als Spritzgussteil ausgebildet ist, Metallstangen 12 zur Verstärkung des Strukturkörpers 11, die sich durch den Strukturkörper 11 erstrecken und eine Blende 13 als Außenverkleidung, die eine Außenwand 11e des Strukturkörpers 11 abdeckt. Der Strukturkörper 11 weist einen Rücken 11d auf, der bei geschlossener Heckklappe 10 zum Fahrzeuginnenraum zeigt und mit beliebigem Dekor versehen sein kann und von dem rippenförmige Versteifungen 11 c im Wesentlichen senkrecht zum Rücken 11 d bzw. zur Erstreckungsrichtung E der Heckklappe 10 hervorstehen und im Wesentlichen parallel zur Schwenkachse S verlaufen. Jeweils zwischen zwei rippenförmigen Versteifungen 11 d ist eine Aufnahme 11 a für eine der Metallstangen 12 zur Verstärkung des Strukturteils 11 ausgebildet.
Die rippenförmigen Versteifungen 11 d erstrecken sich im Wesentlichen parallel zur Schwenkachse S vorzugsweise über die gesamte Breite des Strukturkörpers 11 in gleichmäßigem Abstand zueinander. Die Blende 13, die als Spritzgussteil ausgebildet ist, bildet die Außenverkleidung der erfindungsgemäßen Heckklappe 10 des dritten Ausführungsbeispiels und deckt den Strukturkörper 11 an der Außenseite ab, so dass die Aufnahmen 11a und die zwischen den rippenförmigen Versteifungen 11 c ausgebildeten Vertiefungen 11 b bei aufgebrachter Blende 13 nicht sichtbar sind.

Figur 4b zeigt die Seitenansicht der erfindungsgemäßen Heckklappe 10 des dritten Ausführungsbeispiels aus Figur 4a. Die Enden der Metallstangen 12 sind verstärkt und sind als Ansatzpunkt für das Haltemittel 6 bzw. die Gasdruckfeder oder das Fangband (siehe Figur 1) ausgebildet.

Die bevorzugte Anwendung der erfindungsgemäßen Heckklappe 10 wird nachstehend mit Bezug auf die beiliegenden Zeichnungen beschrieben.

Die in Figuren 2a und 2b abgebildete Heckklappe 10 des ersten Ausführungsbeispiels wird zunächst durch Herstellen des Strukturkörpers 11 im Blasformverfahren, vorzugsweise Extrusionsblasformverfahrens unter Verwendung geeigneter Kunststoffe hergestellt. Nach der Ausbildung des Strukturkörpers 11 werden die Metallstangen 12 zur Verstärkung in die vorgesehenen Aufnahmen 11a an der Innenwand 11d des Strukturkörpers 11 eingesetzt und beispielsweise im Klemmsitz befestigt. Anschließend wird ein Scharnierabschnitt 7a des Scharniers 7 an der Heckklappe 10 befestigt und ein Scharnierabschnitt 7b des Scharniers 7 an der Ladekante 4 des Fahrzeugs 1 befestigt. Anschließend wird ein Ende des Haltemittels 6 an der Karosserie des Fahrzeugs 1 befestigt und das andere Ende des Haltemittels 6 wird an das verstärkte Ende der weiter von der Schwenkachse S entfernt liegenden Metallstange 12 angeschlossen. Beim Verschwenken der Heckklappe 10 von einer geschlossenen Stellung in die in Figur 1 gezeigte geöffnete Stellung bewirkt das Haltemittel 6, dass die Heckklappe 10 bei einer Belastung der Heckklappe 10 in der geöffneten Stellung auch im Wesentlichen in der waagerechten Stellung verbleibt.

Die in den Figuren 3a und 3b dargestellte Heckklappe 10 des zweiten Ausführungsbeispiels wird wie folgt hergestellt: zunächst wird der Strukturkörper 11 im Blasformverfahren, vorzugsweise im Extrusionsblasformverfahren hergestellt und die Metallstangen 12 werden in die dafür vorgesehenen Aufnahmen 11a des Strukturkörpers 11 eingesetzt und darin befestigt. Anschließend wird der Scharnierabschnitt 7a des Scharniers 7 an dem Strukturkörper 11 befestigt. Nachfolgend wird die Blende 13 als Außenverkleidung auf die Außenwand 11e des Strukturkörpers 11 aufgebracht und der Scharnierabschnitt 7b des Scharniers 7 wird am Fahrzeug 1 verschraubt. Nachfolgend wird das Haltemittel 6 in der zuvor beschriebenen Art und Weise an die Karosserie des Fahrzeugs 1 und das verstärkte Ende der Metallstange 12 angeschlossen.

Die in den Figuren 4a und 4b dargestellte erfindungsgemäße Heckklappe 10 des dritten Ausführungsbeispiels wird wie folgt hergestellt: zunächst wird der Strukturkörper 11 als Spritzgussteil ausgebildet. Anschließend werden die Metallstangen 12 als Verstärkung des Strukturteils 11 in die dafür vorgesehenen Aufnahmen 11 a des Strukturkörpers 11 eingesetzt und darin befestigt.

Anschließend wird der für die Heckklappe 10 vorgesehene Scharnierabschnitt 7a mit dem Strukturkörper 11 verbunden und danach die Blende 13 auf den Strukturkörper 11 aufgesetzt, um sowohl den Scharnierabschnitt 7a als auch die Außenseite des Strukturkörpers 11 vollständig abzudecken, so dass die Aufnahmen 11a und die Vertiefungen 11 b zwischen den rippenförmigen Versteifungen 11c vollständig abgedeckt und nicht sichtbar sind. Danach wird der Scharnierabschnitt 7b an der Karosserie des Fahrzeugs 1 befestigt und zuletzt das Haltemittel 6 in der zuvor beschriebenen Art und Weise an der Karosserie des Fahrzeugs 1 und dem verstärkten Ende der weiter von der Schwenkachse S entfernt liegenden Metallstange 12 angeschlossen.

## Patentansprüche

1. Klappe (10), vorzugsweise Heckklappe (10) für ein Fahrzeug (1), die über eine Schwenkachse (S) schwenkbar an der Karosserie des Fahrzeugs (1) festlegbar ist, umfassend einen Strukturkörper (11) aus Kunststoff und eine Verstärkung (12) aus Metall, **dadurch gekennzeichnet, dass** die Verstärkung aus Metall (12) als eine sich durch den Strukturkörper (11) erstreckende Metallstange (12) ausgebildet ist.

2. Klappe (10) nach Anspruch 1 **dadurch gekennzeichnet, dass** die Metallstange (12) im Querschnitt ein Normprofil, vorzugsweise ein T-Profil, Doppel-T-Profil, Rechteckprofil oder Kreisprofil aufweist.

3. Klappe (10) nach einem der vorangegangenen Ansprüche **dadurch gekennzeichnet, dass** die Metallstange (12) als Hohlkörper, vorzugsweise als Rohr ausgebildet ist.

4. Klappe (10) nach einem der vorangegangenen Ansprüche **dadurch gekennzeichnet, dass** sich die Metallstange (12) im Wesentlichen parallel zur Schwenkachse (S) erstreckt.

5. Klappe (10) nach einem der vorangegangenen Ansprüche **dadurch gekennzeichnet, dass** zumindest eine weitere, sich im Wesentlichen parallel zur ersten Metallstange (12) erstreckende Metallstange vorgesehen ist.

6. Klappe (10) nach einem der vorangegangenen Ansprüche **dadurch gekennzeichnet, dass** der Strukturkörper (11) als Blasformteil, vorzugsweise als Extrusionsblasteil ausgebildet ist.

7. Klappe (10) nach einem der vorangegangenen Ansprüche **dadurch gekennzeichnet, dass** der Strukturkörper (11) im Querschnitt eine geschlossene Kontur aufweist.

8. Klappe (10) nach einem der vorangegangenen Ansprüche **dadurch gekennzeichnet, dass** der Strukturkörper (11) zumindest ein rippenförmiges Versteifungselement (11 c) aufweist.

9. Klappe (10) nach einem der vorangegangenen Ansprüche **dadurch gekennzeichnet, dass** das Versteifungselement (11c) als Seitenwand einer wellenförmigen Vertiefung (11 b) ausgebildet ist.

10. Klappe (10) nach einem der vorangegangenen Ansprüche **dadurch gekennzeichnet, dass** der Strukturkörper als Spritzgussteil ausgebildet ist.

11. Klappe (10) nach einem der vorangegangenen Ansprüche **dadurch gekennzeichnet, dass** sich das Versteifungselement (11 c) im Querschnitt im Wesentlichen senkrecht zu einer Erstreckungsrichtung (E) der Heckklappe (10) erstreckt

12. Klappe (10) nach einem der vorangegangenen Ansprüche **dadurch gekennzeichnet, dass** der Strukturkörper (11) eine Aufnahme (11a) für die Metallstange (12) aufweist.

13. Klappe (10) nach einem der vorangegangenen Ansprüche **dadurch gekennzeichnet, dass** die Klappe (10) eine Außenblende (13) aufweist.

14. Klappe (10) nach einem der vorangegangenen Ansprüche **dadurch gekennzeichnet, dass** die Außenblende (13) als Spritzgussteil ausgebildet ist.

15. Klappe (10) nach einem der vorangegangenen Ansprüche **dadurch gekennzeichnet, dass** die Aufnahme (11a) für die Metallstange (12) und/oder die Vertiefungen (11 b) von der Außenblende (13) abgedeckt sind.
